# DEMANDE DE BREVET EUROPEEN

(11) **EP 2 495 623 A1**
(43) Date de publication de la demande: **05.09.2012**
(21) Numéro de dépôt: 12157239.0
(22) Date de dépôt: 28.02.2012
(51) Int. Cl.: G05B 19/042, G01K 15/00, F24C 7/08, G05D 23/24, H05B 1/02, G05B 23/02, A47L 15/00, A21B 1/40, D06F 33/00, D06F 39/00, G05B 9/02

(54) **Procédé de détection d'une défaillance d'une sonde de température**

(30) Priorité: 01.03.2011 FR 1100616
(71) Demandeur: FagorBrandt SAS, 92500 Rueil Malmaison (FR)
(72) Inventeur: Garnon, Xavier, 45400 FLEURY LES AUBRAIS (FR); Oudart, Pascal, 45240 LA FERTE SAINT AUBIN (FR)
(74) Mandataire: Stankoff, Hélène

(57) **Abrégé**

Un procédé de détection d'une défaillance d'une sonde de température dans un appareil électrique domestique comporte les étapes suivantes mises en oeuvre par un microcontrôleur de sécurité lorsque l'appareil électrique est mis en fonctionnement :
- réception (E10) d'une information indiquant qu'une étape de chauffage est mise en oeuvre dans ledit appareil électrique, et
- vérification de la température (E20) mesurée par la sonde de température.

Utilisation notamment dans un four de cuisson.

## Description

La présente invention concerne un procédé de détection d'une défaillance d'une sonde de température.

En particulier, la défaillance de la sonde de température correspond à une variation incorrecte de la température mesurée par la sonde de température.

La présente invention concerne également un appareil électrique domestique adapté à mettre en oeuvre le procédé de détection conforme à l'invention.

Dans certains appareils électriques domestiques, un microcontrôleur de fonctionnement est dédié à la commande des organes de fonctionnement de l'appareil ainsi qu'à la commande des organes de sécurité de l'appareil.

Le document EP 1 801 676 décrit un dispositif de commande électronique d'un appareil électrique domestique comportant un microcontrôleur de fonctionnement dédié à commander les organes de fonctionnement de l'appareil électrique et un microcontrôleur de sécurité dédié à commander les organes de sécurité de l'appareil électrique, notamment en cas de défaillance de l'appareil électrique.

Ainsi, lorsque le microcontrôleur de sécurité détecte des défaillances relatives à des composants de l'appareil, il commande des organes de sécurité de l'appareil.

Lorsque l'appareil électrique comporte une sonde de température (par exemple un four), le microcontrôleur de sécurité peut déceler certaines défaillances d'une sonde de température installée dans un four afin de surveiller la température dans l'enceinte de cuisson.

Par exemple, le microcontrôleur de sécurité peut détecter lorsque la sonde de température est en circuit ouvert, c'est-à-dire lorsqu'elle est par exemple débranchée, et lorsqu'elle est en court-circuit par exemple dû à un court-circuit des fils connectés à la sonde.

Une sonde de température peut avoir une défaillance dans son propre fonctionnement de la sonde de température.

Cette défaillance correspond à une mauvaise mesure de la variation de température par la sonde de température, par exemple la valeur mesurée par la sonde reste fixe alors que la température dans l'enceinte de cuisson du four varie.

Une sonde de température défaillante peut mettre en cause la sécurité de l'appareil électroménager pour un utilisateur.

Les appareils électriques connus tels que décrits précédemment présentent l'inconvénient que la valeur mesurée par la sonde de température peut rester fixe du fait d'une non-conformité de la sonde de température. Elle peut aussi rester fixe du fait d'une mauvaise installation de la sonde dans l'appareil. Par exemple, dans le cas d'un four de cuisson, si la sonde n'est pas insérée à l'intérieur de l'enceinte de cuisson ou si elle est insérée dans l'épaisseur de l'isolant qui entoure l'enceinte de cuisson, ses variations seront très réduites par rapport aux variations de température de l'enceinte de cuisson.

La présente invention a pour but de résoudre les inconvénients précités et de proposer un procédé de détection de la défaillance d'une sonde de température dans un appareil électrique domestique permettant de vérifier une variation correcte de la température mesurée par la sonde de température.

A cet effet, la présente invention vise un procédé de détection d'une défaillance d'une sonde de température dans un appareil électrique domestique comportant un microcontrôleur de fonctionnement commandant des organes de fonctionnement de l'appareil électrique et un microcontrôleur de sécurité commandant des organes de sécurité de l'appareil électrique, la défaillance de la sonde de température correspondant à une variation incorrecte de la température mesurée par la sonde de température.

Selon l'invention, le procédé comporte les étapes suivantes mises en oeuvre par le microcontrôleur de sécurité lorsque l'appareil électrique est mis en fonctionnement :
- réception d'une information indiquant qu'une étape de chauffage est mise en oeuvre dans l'appareil électrique, et
- vérification de la température mesurée par la sonde de température.

Ainsi, une fois que l'appareil électrique est mis en fonctionnement, le microcontrôleur de sécurité reçoit une information concernant la mise en oeuvre d'une étape de chauffage et peut ainsi vérifier le fonctionnement de la sonde de température et par conséquent déceler une possible défaillance.

Par conséquent, la vérification de la sonde de température est mise en oeuvre lors du fonctionnement de l'appareil électrique et donc la fabrication de l'appareil électrique n'est pas ralentie à cause de la vérification de la défaillance de la sonde de température.

En outre, la défaillance étant détectée, un utilisateur est en sécurité lors de l'utilisation de l'appareil électrique.

Par exemple, l'information indiquant qu'une étape de chauffage est mise en oeuvre est un signal émis par le microcontrôleur de fonctionnement lorsqu'il commande la mise en oeuvre de ladite étape de chauffage.

L'information de la mise en oeuvre de l'étape de chauffage provient ainsi du microcontrôleur de fonctionnement.

Le signal indiquant qu'une étape de chauffage est mise en oeuvre, est émis au démarrage de l'étape de chauffage.

Par exemple, le signal émis par le microcontrôleur de fonctionnement est transmis par le biais d'une liaison série de communication entre le microcontrôleur de sécurité et le microcontrôleur de fonctionnement.

En pratique, l'étape de vérification de la température consiste à vérifier l'évolution dans le temps de la température mesurée par la sonde de température.

Ainsi, lorsqu'une étape de chauffage est mise en oeuvre, le microcontrôleur de sécurité vérifie que l'évolution de la température mesurée par la sonde de température est correcte.

Par exemple, l'étape de vérification comporte une étape de comparaison avec une valeur prédéterminée de la valeur correspondant à la différence entre deux valeurs de température mesurées par la sonde de température respectivement à deux instants de temps différents.

Le microcontrôleur de sécurité vérifie ainsi l'évolution de la température mesurée par la sonde de température entre deux instants de temps distincts.

Avantageusement, lorsque la valeur correspondant à la différence entre deux valeurs de température mesurées est inférieure à la valeur prédéterminée, une étape d'avertissement de la défaillance de la sonde de température est mise en oeuvre.

Ainsi, un utilisateur de l'appareil électrique domestique est averti de la défaillance de la sonde de température.

La présente invention vise selon un second aspect un appareil électrique domestique comportant une sonde de température, un microcontrôleur de fonctionnement commandant des organes de fonctionnement de l'appareil électrique et un microcontrôleur de sécurité commandant des organes de sécurité de l'appareil électrique.

Selon l'invention, le microcontrôleur de sécurité comporte :
- des moyens de réception d'une information indiquant qu'une étape de chauffage est mise en oeuvre dans ledit appareil électrique, et
- des moyens de vérification de la température mesurée par la sonde de température.

Par exemple, l'appareil électrique domestique est un four de cuisson comportant une enceinte de cuisson, ladite sonde de température mesurant la température dans ladite enceinte de cuisson.

Cet appareil électrique domestique présente des caractéristiques et avantages analogues à ceux décrits précédemment en relation avec le procédé de détection d'une défaillance d'une sonde de température.

D'autres particularités et avantages de l'invention apparaîtront encore dans la description ci-après.

Aux dessins annexés, donnés à titre d'exemples non limitatifs :
- la figure 1 est un schéma électronique illustrant des éléments dans un appareil électrique domestique conforme à l'invention ;
- la figure 2 est un exemple de circuit électrique avec une sonde de température, et
- la figure 3 est un algorithme décrivant le procédé de détection d'une défaillance d'une sonde de température conforme à un mode de réalisation de l'invention.

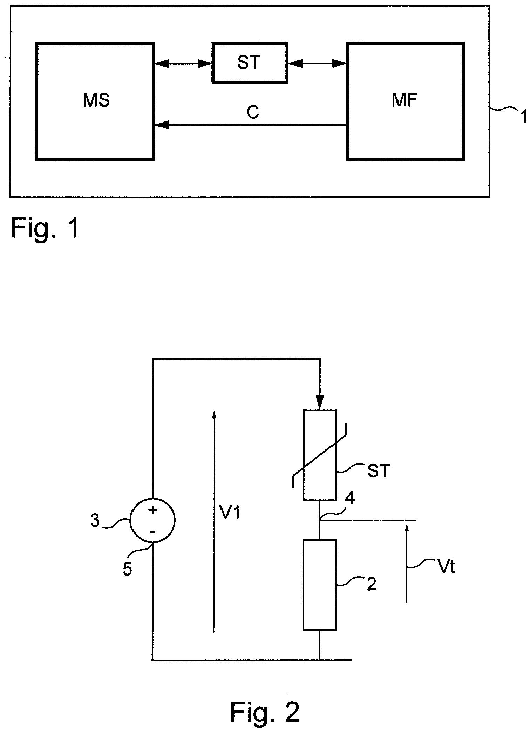

On va décrire tout d'abord en référence à la figure 1 certains composants de l'appareil électrique domestique 1, ainsi que le principe général de leur fonctionnement.

L'appareil électrique domestique 1 comporte une sonde de température ST.

Dans ce mode de réalisation décrit, l'appareil électrique domestique 1 est par exemple un four de cuisson 1, la sonde de température ST étant prévue dans l'enceinte de cuisson du four 1 et permettant de surveiller la température dans l'enceinte de cuisson.

Bien entendu, l'appareil électrique domestique 1 peut être un autre appareil électrique comportant une sonde de température ST, par exemple, une plaque de cuisson, une cuisinière, un appareil à laver et/ou sécher le linge, un lave-vaisselle ou encore un réfrigérateur.

Les organes de fonctionnement du four 1 sont commandés par un microcontrôleur de fonctionnement MF, et les organes de sécurité sont commandés par un microcontrôleur de sécurité MS.

Ainsi, par exemple, le microcontrôleur de fonctionnement MF régule la température dans l'enceinte de cuisson autour d'une valeur de consigne en fonction de la valeur mesurée par la sonde de température ST.

Par conséquent, un fonctionnement correct de la sonde de température ST est indispensable pour le bon fonctionnement du four 1.

En plus d'un montage électrique défectueux de la sonde de température ST, c'est-à-dire une sonde de température ST en court circuit ou en circuit ouvert, une défaillance dite "sonde de température ST invariante" peut être possible.

Cette défaillance consiste en une mauvaise mesure de la variation de température par la sonde de température ST. Par exemple, la sonde de température ST peut montrer une évolution nulle de la valeur mesurée par la sonde, alors que la température dans l'enceinte de cuisson varie.

Ainsi, une variation incorrecte de la sonde correspond à une sonde présentant une valeur fixe, c'est-à-dire que la sonde ne mesure pas un changement de température dans l'enceinte de cuisson.

Une première cause de cette défaillance peut provenir d'une défaillance proprement dite de la sonde de température ST, à cause par exemple d'un défaut de fabrication de la sonde.

Par exemple, une sonde de température fabriquée dans un matériau inadapté peut ne pas mesurer les variations de température.

Une seconde cause de cette défaillance peut être un mauvais montage de la sonde de température ST dans le four 1.

Par exemple, la sonde peut être installée en dehors de l'enceinte de cuisson, par exemple, par un oubli de montage.

Ainsi, une telle sonde de température ST ne mesure pas la température dans l'enceinte de cuisson.

Dans un autre exemple, la sonde de température ST peut être installée dans l'enceinte de cuisson mais de manière incorrecte, par exemple elle peut être enfoncée partiellement dans l'isolant de l'enceinte de cuisson et ne pas traverser l'isolant jusqu'à l'enceinte de cuisson.

Dans ce cas, la sonde de température ST mesure la variation de la température dans l'enceinte de cuisson, mais pas correctement.

Ainsi, dans ce cas, la variation de température mesurée par la sonde de température ST n'est représentative de la variation de température dans l'enceinte de cuisson.

Dans un mode de réalisation, une sonde de température ST est une sonde à résistance variable en fonction de la température.

Afin de connaître la température mesurée par la sonde de température, la sonde de température ST est placée dans un circuit électrique qui permet de transformer la variation de la résistance en une variation de tension continue.

Ainsi, cette tension continue représente une température mesurée par la sonde de température.

Le microcontrôleur de fonctionnement MF et/ou le microcontrôleur de sécurité MS utilise une table de correspondance permettant de connaître la température à laquelle la sonde est exposée en fonction de la tension continue mesurée.

Dans un autre exemple, les microcontrôleurs MF, MS peuvent déterminer la température mesurée par la sonde en fonction de la tension continue mesurée.

Selon un mode de réalisation, la sonde de température peut être montée dans un circuit électrique comme celui représenté à la figure 2.

La sonde de température ST est connectée en série avec une résistance 2 de valeur fixe, une tension continue 3 est appliquée au montage série de la sonde de température ST et de la résistance 2.

La tension continue Vt représentative de la température mesurée par la sonde de température ST est prise entre la borne 4 de la sonde de température ST qui est connectée à la résistance 2 et le potentiel négatif 5 de la tension continue 3 appliquée à la sonde de température ST et à la résistance 2.

Bien entendu, d'autres types de sondes de température, ainsi que d'autres montages électriques de la sonde de température peuvent être employés.

Le microcontrôleur de sécurité MS est chargé de vérifier que la mesure de la variation de la température par la sonde de température ST est correcte lorsque l'enceinte de cuisson est chauffée.

On considère que l'enceinte de cuisson est chauffée lorsque la température de l'enceinte est incrémentée pendant une période de temps. En effet, lorsqu'un utilisateur du four commande le chauffage de l'enceinte de cuisson à une valeur de consigne pendant une première période de temps, la température de cuisson est incrémentée jusqu'à ce qu'elle arrive à la température de consigne. Une fois la température de consigne atteinte, une étape de régulation à la température de consigne débute.

Ainsi, le chauffage de l'enceinte de cuisson (ou étape de chauffage), correspond à une période dans laquelle la température de l'enceinte de cuisson est incrémentée afin d'atteindre une température de consigne.

Ainsi, lorsque la température de l'enceinte de cuisson est régulée autour d'une valeur de consigne et que la température de l'enceinte de cuisson est modifiée, par exemple par l'ouverture de la porte du four, un nouveau cycle de chauffage débute. De la même façon, lorsque l'utilisateur du four modifie la température de consigne, un nouveau cycle de chauffage débute.

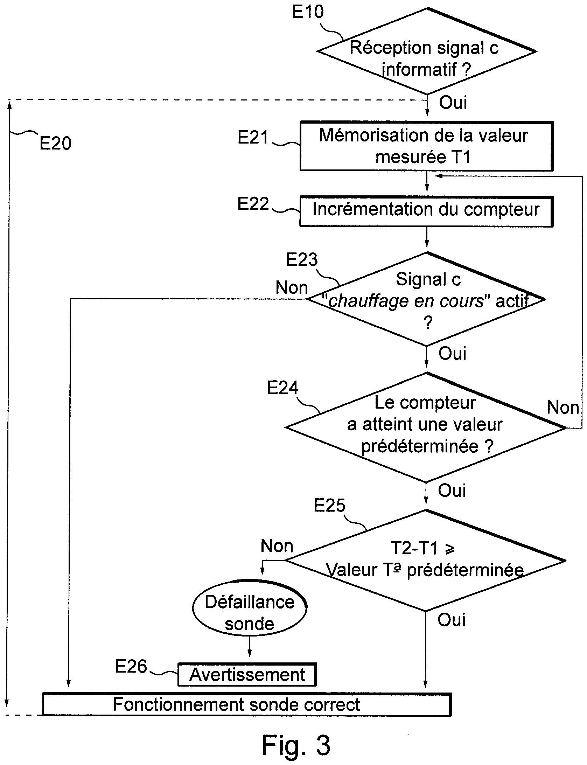

Ainsi, comme il sera décrit en référence à la figure 3, le microcontrôleur de sécurité MS reçoit un signal informatif c indiquant la mise en oeuvre d'une étape de chauffage de l'enceinte de cuisson.

Dans l'exemple décrit, ce signal informatif c provient du microcontrôleur de fonctionnement MF.

Le microcontrôleur de fonctionnement MF émet le signal c indiquant qu'une étape de chauffage est mise en oeuvre dans le four 1 au démarrage de cette étape de chauffage.

Ce signal informatif c peut consister en une donnée, par exemple binaire, émise par le biais d'une liaison série de communication entre le microcontrôleur de fonctionnement MF et le microcontrôleur de sécurité MS.

Ainsi, dès qu'une étape de chauffage est initiée, le microcontrôleur de sécurité MS vérifie le bon fonctionnement de la sonde de température ST.

Bien entendu, ce signal pourrait provenir d'autres moyens, par exemple, d'un module relié à un clavier de commande du four 1. Le clavier de commande correspond à l'interface entre le four de cuisson et un utilisateur. Cette interface comprend des organes de commande et des afficheurs.

Ainsi, l'utilisateur du four 1 commande la chauffe de l'enceinte de cuisson à travers le clavier de commande.

Le microcontrôleur de sécurité MS comporte des moyens aptes à mettre en oeuvre le procédé de détection d'une défaillance de la sonde de température ST conforme à l'invention, en particulier il comporte des moyens de réception du signal informatif c indiquant la mise en oeuvre d'une étape de chauffage dans l'enceinte de cuisson, ainsi que des moyens de vérification de la température mesurée par la sonde de température ST.

On va décrire ensuite en référence à la figure 3 un exemple de réalisation du procédé de détection d'une défaillance d'une sonde de température ST conforme à l'invention.

Le procédé de détection d'une défaillance d'une sonde de température ST débute avec une étape de réception E10 par le microcontrôleur de sécurité d'une information indiquant qu'une étape de chauffage est mise en oeuvre dans le four 1.

En effet, au démarrage de l'étape de chauffage, le microcontrôleur de sécurité MS reçoit un signal c indiquant qu'une étape de chauffage est mise en oeuvre dans le four 1.

Dans un mode de réalisation, le signal c indicatif de la mise en oeuvre de l'étape de chauffage est maintenu pendant toute la durée de l'étape de chauffage.

Dans un autre mode de réalisation, le signal c indicatif de la mise en oeuvre de l'étape de chauffage est émis lorsqu'une transmission d'informations est mise en oeuvre par le biais de la liaison série de communication, pendant toute la durée de l'étape de chauffage.

Ainsi, le signal c indicatif de la mise en oeuvre de l'étape de chauffage fait partie des informations transmises par le biais de la liaison série de communication. Ces informations peuvent être transmises à plusieurs reprises pendant toute la durée de l'étape de chauffage et en dehors. Pendant la durée de l'étape de chauffage, le signal c qui fait partie des informations transmises est actif. En dehors de l'étape de chauffage, le signal c qui fait partie des informations transmises est inactif.

Par exemple, le signal c est binaire, c'est-à-dire qu'il présente une première valeur lorsqu'une étape de chauffage est mise en oeuvre (ou que le chauffage est en cours), ou une seconde valeur lorsqu'une étape de chauffage n'est pas mise en oeuvre dans le four 1.

Ainsi, par simple analyse de ce signal, le microcontrôleur de sécurité MS met ou ne met pas en oeuvre l'étape de vérification E20 de la température mesurée par la sonde de température ST.

Ainsi, une fois que le microcontrôleur de sécurité a reçu l'information indiquant qu'une étape de chauffage est mise en oeuvre dans le four 1, il met en oeuvre une étape de vérification E20 de la température mesurée par la sonde de température ST.

Au début de l'étape de vérification E20, le microcontrôleur de sécurité MS met en oeuvre une étape de mémorisation E21 de la valeur T1 mesurée par la sonde de température ST.

L'étape de vérification E20 comporte une étape de commande d'une temporisation E22.

Dans ce mode de réalisation, la temporisation est mise en oeuvre par un compteur numérique.

Ainsi, lors de l'étape de commande de la temporisation E22, le compteur démarre.

Une fois la temporisation commandée, on met en oeuvre une étape de vérification E23 du signal c indiquant qu'une étape de chauffage est mise en oeuvre.

Lors de cette étape de vérification E23, on vérifie si le signal indiquant la mise en oeuvre d'une étape de chauffage est toujours actif, c'est-à-dire si l'étape de chauffage est toujours mise en oeuvre.

Lorsqu'à l'étape de vérification du signal E23, la réponse est positive, on vérifie lors d'une étape de vérification de la temporisation E24 si la temporisation est finie, par exemple si le compteur a atteint une valeur prédéfinie correspondant à un instant de temps.

Si le compteur n'a pas atteint une valeur prédéfinie correspondant à un instant de temps, on revient à l'étape d'incrémentation du compteur E22.

Selon un mode de réalisation, l'étape de vérification de la température E20 comporte une étape de comparaison E25 avec une valeur prédéterminée T^{a} de la valeur correspondant à la différence entre deux valeurs de température T1, T2 mesurées par la sonde de température ST respectivement à deux instants de temps différents.

Ainsi, on peut déterminer la différence entre la température mesurée par la sonde de température ST à un instant de temps, par exemple la température T2 à l'instant de temps auquel la temporisation est finie (ou le compteur a atteint une valeur prédéfinie), et la température T1 mesurée au début de la mise en oeuvre de l'étape de vérification de la température E20, c'est-à-dire à l'étape de mémorisation E21.

Lorsque la sonde de température ST fonctionne correctement, la valeur correspondant à la différence entre deux valeurs de température T1, T2 mesurées par la sonde de température ST respectivement à deux instants de temps différents est représentative de l'échauffement de l'enceinte du four produit entre les deux instants de temps.

Par exemple, lorsque la valeur correspondant à la différence entre les valeurs de température mesurées à deux instants donnés est inférieure à une valeur prédéterminée T^{a}, on détermine que la sonde de température ST présente une défaillance.

Dans un mode de réalisation, lorsque l'on détermine que la sonde de température ST présente une défaillance, une étape d'avertissement E26 de la défaillance de la sonde de température ST est mise en oeuvre.

Dans un autre mode de réalisation, lorsque l'on détermine que la sonde de température ST présente une défaillance, une étape de mise en sécurité de l'appareil électrique est mise en oeuvre.

Ainsi, lorsque l'on détermine que la sonde de température ST présente une défaillance, l'utilisateur est empêché d'utiliser le four.

Si à l'étape de comparaison E25 la valeur correspondant à la différence entre les valeurs de température T1, T2 mesurées à deux instants donnés est supérieure ou égale à la valeur prédéterminée T^{a}, on détermine que la sonde de température ST fonctionne correctement.

Si à l'étape de vérification du signal E23 indiquant qu'une étape de chauffage est mise en oeuvre, le signal n'est plus actif (par exemple, il présente la seconde valeur prédéterminée), c'est-à-dire qu'une étape de chauffage n'est plus mise en oeuvre, on considère que la sonde de température ST fonctionne correctement.

Dans ce cas, l'étape de chauffage a été arrêtée avant que la temporisation ne se termine ou que le compteur ait atteint une valeur prédéfinie dans ce mode de réalisation.

Ainsi, par défaut, l'étape de vérification de la température E20 indique que la sonde de température ST fonctionne correctement et le four 1 continue normalement son fonctionnement, par exemple en mettant en oeuvre une nouvelle étape de chauffage.

En effet, dans ce cas, le temps de chauffe disponible pour la vérification de la sonde est trop court pour prendre une décision sur l'état de la sonde.

La valeur de la temporisation et la valeur de température prédéterminée T^{a} sont des valeurs prédéterminées en fonction de plusieurs paramètres.

En particulier, elles sont prédéterminées en fonction de la cause de la défaillance que l'on cherche à déterminer (défaillance de la sonde ou un mauvais positionnement de la sonde), et en fonction du type d'appareil électrique.

Ainsi, à titre d'exemple nullement limitatif, pour un four de cuisson, la valeur de la temporisation est de cinq minutes et la valeur de température prédéterminée varie dans une plage de température s'étendant entre 2° et 20°C.

Par exemple, lorsque l'on cherche à détecter une défaillance de la sonde elle-même (par exemple une sonde dont le matériau sensible à la température est inapproprié et ne varie pas ou pas suffisamment), la valeur de température prédéterminée T^{a} est de 2°C.

Lorsque l'on cherche à détecter un défaut d'installation de la sonde dans un four de cuisson, par exemple lorsque la sonde est dans l'isolant ou à l'extérieur de l'enceinte de cuisson du four, la valeur de température prédéterminée est par exemple de 20°C.

Bien entendu, ces valeurs sont données à titre d'exemples non limitatifs.

La valeur de temporisation de 5mn dans le cas d'un four de cuisson, est sélectionnée dès lors qu'en moyenne, le temps nécessaire pour préchauffer un four qui se trouve à température ambiante est d'environ 5 mn.

On notera que si un cycle de chauffage de l'enceinte de cuisson d'un four de cuisson vient d'être effectué et qu'un nouveau cycle est lancé alors que l'enceinte de cuisson est encore chaude, le temps de préchauffage de l'enceinte de cuisson est de moins de 5 mn. Dans ce cas, le procédé n'est pas effectué dès lors que la temporisation n'atteint pas la fin avant que l'enceinte de cuisson soit préchauffée, c'est-à-dire avant la fin du cycle de chauffage.

Néanmoins, le procédé a été mis en oeuvre lors du cycle de chauffage précédent où la valeur mesurée T1 par la sonde de température ST en début de cycle correspondait à la température ambiante.

Dans un autre mode de réalisation, le procédé de détection d'une défaillance conforme à l'invention est effectué seulement dans certains cycles de chauffage. Par exemple, le procédé est effectué seulement lors de la première mise en oeuvre d'un cycle de chauffage dans l'appareil électrique après la mise sous tension de l'appareil.

Ainsi, une défaillance de la sonde de température (soit due à sa fabrication, soit due à son montage) est détectée dès le début de l'utilisation du four.

Lorsque le procédé de détection est mis en oeuvre au démarrage d'un cycle de cuisson, l'enceinte de cuisson est proche de la température ambiante de la pièce.

Dans un mode de réalisation, le microcontrôleur de sécurité MS est apte à détecter un fonctionnement anormal de la commande de chauffe provenant du microcontrôleur de fonctionnement MF.

Ainsi, par exemple si le logiciel du microcontrôleur de fonctionnement MF présente un dysfonctionnement au niveau de la commande de chauffe et qu'il commande la chauffe de l'enceinte de cuisson sans informer le microcontrôleur de sécurité MS par le signal c, le microcontrôleur de sécurité MS détecte une élévation de température, alors que le signal de chauffe n'a pas été activé.

Ainsi, le microcontrôleur de sécurité MS détecte un fonctionnement anormal du microcontrôleur de fonctionnement MF et commande les organes de sécurité afin d'arrêter la chauffe de l'enceinte de cuisson.

Ainsi, grâce à l'invention, la vérification du bon fonctionnement de la sonde de température est mise en oeuvre lorsque l'appareil électrique est mis en fonctionnement, et le temps de fabrication de l'appareil n'est pas augmenté.

En outre, un utilisateur est en sécurité lors de l'utilisation de l'appareil électrique.

Par ailleurs, le procédé de détection d'une défaillance d'une sonde de température ST peut être mis en oeuvre dans tout appareil électrique domestique comportant une sonde de température ST, par exemple une plaque de cuisson, une cuisinière, un appareil à laver et/ou sécher le linge, un lave-vaisselle, ou encore un réfrigérateur.

## Revendications

1. Procédé de détection d'une défaillance d'une sonde de température (ST) dans un appareil électrique domestique (1) comportant un microcontrôleur de fonctionnement (MF) commandant des organes de fonctionnement de l'appareil électrique (1) et un microcontrôleur de sécurité (MS) commandant des organes de sécurité de l'appareil électrique (1), la défaillance de la sonde de température correspondant à une variation incorrecte de la température mesurée par la sonde de température, ledit procédé étant **caractérisé en ce qu'**il comporte les étapes suivantes mises en oeuvre par ledit microcontrôleur de sécurité lorsque l'appareil électrique est mis en fonctionnement :
- réception (E10) d'une information indiquant qu'une étape de chauffage est mise en oeuvre dans ledit appareil électrique (1), et
- vérification de la température (E20) mesurée par la sonde de température (ST).

2. Procédé de détection selon la revendication 1, **caractérisé en ce que** l'information indiquant qu'une étape de chauffage est mise en oeuvre est un signal (c) émis par le microcontrôleur de fonctionnement (MF) lorsqu'il commande ladite mise en oeuvre de l'étape de chauffage.

3. Procédé de détection selon la revendication 2, **caractérisé en ce que** ledit signal (c) émis par le moyen de fonctionnement (MF) est transmis par le biais d'une liaison série de communication entre le microcontrôleur de sécurité (MS) et le microcontrôleur de fonctionnement (MF).

4. Procédé de détection selon l'une des revendications 1 à 3, **caractérisé en ce que** l'étape de vérification de la température (E20) consiste à vérifier l'évolution dans le temps de la température mesurée par la sonde de température (ST).

5. Procédé de détection selon l'une des revendications 1 à 3, **caractérisé en ce que** l'étape de vérification comporte une étape de comparaison (E25) avec une valeur prédéterminée (T^{a}) de la valeur correspondant à la différence entre deux valeurs de température mesurées (T1, T2) par la sonde de température (ST) respectivement à deux instants de temps différents.

6. Procédé de détection selon la revendication 5, **caractérisé en ce que** l'étape de vérification comporte une étape de commande d'une temporisation (E22), la temporisation générant lesdits instants de temps.

7. Procédé de détection selon l'une des revendications 5 ou 6, **caractérisé en ce que** lorsque la valeur correspondant à la différence entre deux valeurs de température mesurées (T1, T2) est inférieure à ladite valeur prédéterminée (T^{a}), une étape d'avertissement (E26) de la défaillance de la sonde de température (ST) est mise en oeuvre.

8. Procédé de détection selon les revendications 5 à 7, **caractérisé en ce que** lorsque la valeur correspondant à la différence entre deux valeurs de température mesurées (T1, T2) est inférieure à la valeur prédéterminée (T^{a}), une étape de mise en sécurité de l'appareil électrique (1) est mise en oeuvre.

9. Appareil électrique domestique (1) comportant une sonde de température (ST), un microcontrôleur de fonctionnement (MF) commandant des organes de fonctionnement de l'appareil électrique et un microcontrôleur de sécurité (MS) commandant des organes de sécurité de l'appareil électrique (1), ledit appareil électrique (1) étant **caractérisé en ce que** le microcontrôleur de sécurité (MS) comporte :
- des moyens de réception d'une information indiquant qu'une étape de chauffage est mise en oeuvre dans ledit appareil électrique (1), et
- des moyens de vérification de la température mesurée par la sonde de température (ST).

10. Appareil électrique domestique (1) selon la revendication 9, **caractérisé en ce qu'**il est un four de cuisson (1) comportant une enceinte de cuisson, ladite sonde de température (ST) mesurant la température dans ladite enceinte de cuisson.
